# EUROPÄISCHE PATENTANMELDUNG

(11) **EP 1 715 269 A1**
(43) Veröffentlichungstag der Anmeldung: **25.10.2006**
(21) Anmeldenummer: 05008482.1
(22) Anmeldetag: 19.04.2005
(51) Int. Cl.: F27B 15/10, F23C 10/20, B01J 8/18, B01J 8/44

(54) **Optimierte Ausbildung eines Düsenbodens eines Wirbelschichtofens**

(71) Anmelder: Lurgi Lentjes AG, 40549 Düsseldorf (DE)
(72) Erfinder: Eschenburg, Jochim, 61381 Friedrichsdorf (DE)
(74) Vertreter: Stenger, Watzke & Ring

(57) **Zusammenfassung**

Die Erfindung betrifft einen Wirbelschichtofen mit einem Wirbelbett (32) und einem Düsenboden (20) zum Eintragen von Fluidisierluft in das Wirbelbett (32), wobei auf dem Düsenboden (20) im wesentlichen plattenförmige Düsen (10) angeordnet sind.
Plattenförmige Düsen haben gegenüber konventionellen Düsen den Vorteil, dass sich Wirbelbettmaterial nicht als Störstoffe verhaken kann und sich störend an den Düsen ansammelt.

## Beschreibung

Die vorliegende Erfindung bezieht sich auf einen Wirbelschichtofen, genauer gesagt auf die Ausgestaltung eines Düsenbodens eines Wirbelschichtofens.

Die Wirbelschichttechnologie beruht auf dem physikalischen Prinzip, daß Partikel zum Schweben gebracht werden können, wenn sie von unten mit Luft angeströmt werden. Praktisch wird dies umgesetzt, indem eine auf einem Düsenboden lose aufgeschüttete Schicht eines inerten Stoffes, wie beispielsweise Sand, von durch den Düsenboden aufwärts strömender Verbrennungsluft angeströmt und in einen Schwebe- bzw. Wirbelzustand gebracht wird, der auch Fluidisierung genannt wird. Die Vorteile der Wirbelschichttechnologie bestehen insbesondere darin, daß ein erheblich verbesserter Stoff- und Wärmeaustausch sowie eine gleichmäßige Verbrennung bei niedrigen Emissionswerten erzielt werden kann.

Herkömmliche Düsenböden weisen normalerweise eine glatte Oberfläche auf, von der eine Vielzahl einzelner Düsen, die eine vorbestimmte Anordnung aufweisen, vorstehen. Der Düsenboden kann gegenüber der Horizontalen in Richtung eines Aschesammelkanals geneigt sein, wodurch der Austrag der Grobasche und der nicht brennbaren Reststoffe erleichtert wird. Ein Problem bei bekannten Düsenböden mit derartigem Aufbau besteht darin, daß sich zwischen den von der Oberfläche des Düsenbodens vorstehenden Düsen Störstoffe aus dem zu verbrennenden Material verhaken und somit nicht durch den Aschesammelkanal aus dem Wirbelschichtofen gefördert werden können. Zur Beseitigung derartiger Störstoffe muß der Betrieb des Wirbelschichtofens daher vorzeitig unterbrochen werden.

Es ist eine **Aufgabe** der vorliegenden Erfindung, einen Wirbelschichtofen mit einem Düsenboden zu schaffen, der einen verbesserten Aufbau aufweist.

Diese Aufgabe wird erfindungsgemäß durch einen Wirbelschichtofen **gelöst**, der ein Wirbelbett und einen Düsenboden zum Eintragen von Fluidisierluft in das Wirbelbett umfaßt, wobei der Düsenboden im wesentlichen plattenförmige Düsen umfaßt. Derartige plattenförmige Düsen weisen gegenüber herkömmlichen Düsen den Vorteil auf, daß sich zwischen ihnen keine Störstoffe aus dem zu verbrennenden Material festsetzen können, da sie keine Vorsprünge aufweisen. Auf Unterbrechungen des Betriebs des Wirbelschichtofens zwecks Beseitigung derartiger Störstoffe kann daher entsprechend verzichtet werden.

Die Düsen sind vorteilhaft im wesentlichen dachziegelförmig ausgebildet und werden entsprechend Seite an Seite, bevorzugt einander überlappend, angeordnet. Die Verlegung der plattenförmigen Düsen auf dem Düsenboden gestaltet sich so recht einfach. Dabei weisen die Düsen bevorzugt Luftleitkanäle auf, durch die während des Betriebs des Wirbelschichtofens Fluidisierluft vom Windkasten durch den Düsenboden in das Wirbelbett strömen kann. Dabei sind die plattenförmigen Düsen vorteilhaft derart beschaffen, daß im auf dem Düsenboden angeordneten Zustand die Fluidisierluft an jeweils zwei Seiten der Düsen unter Nutzung des Coandereffektes aus den Düsen in das Wirbelbett eintreten kann.

Die Düsen weisen bevorzugt ein verschleißfestes Material auf, wie beispielsweise Stahlguß oder Keramik. Sie können wahlweise auch mit einer Feuerfestmasse überzogen sein.

Gemäß einer Ausgestaltung des erfindungsgemäßen Wirbelschichtofens weist der Düsenboden eine im wesentlichen wellenförmige Oberfläche auf. Dabei ist der Düsenboden bevorzugt gegenüber der Horizontalen geneigt, um den Austrag der nicht brennbaren Reststoffe und der Grobasche zu erleichtern. Die Neigung des Düsenbodens gegenüber der Horizontalen liegt vorteilhaft zwischen 0 und 40°.

Bevorzugt weist der Düsenboden eine Tragkonstruktion auf, auf der die Düsen angeordnet sind. Diese Tragkonstruktion umfaßt mit Stegen verbundene Konstruktionsprofile, vorzugsweise Rohre, wobei die Rohre vorteilhaft gleichzeitig als Kühlrohre dienen, durch die ein Kühlmedium zwecks Kühlung des Düsenbodens strömen kann. Bevorzugt dienen die Rohre auch als Transportrohre für die Fluidisierluft. Die Düsenbodenkühlung kann dabei in den Wasser-Dampfkreislauf eines Dampferzeugers integriert sein. Bevorzugt erfolgt die Kühlung des Düsenbodens mit Gasen, beispielsweise Luft, oder mit Sohlen. Zusätzlich kann die Tragkonstruktion mit keramischen Massen oder Formsteinen belegt werden, um einen Schutz vor der im Brennraum vorherrschenden Hitze zu schaffen.

Gemäß einer bevorzugten Ausgestaltung des erfindungsgemäßen Wirbelschichtofens weist der Düsenboden Öffnungen auf, durch welche die Fluidisierluft unterhalb der Düsen austritt.

Ferner ist bevorzugt, daß in den Düsenboden zumindest ein Aschesammelkanal integriert ist. An diesen Aschesammelkanal kann sich ein Aschekühlschacht zwecks Kühlung der ausgetragenen Grobasche anschließen. Der Aschesammelkanal ist bevorzugt gegenüber der Horizontalen geneigt, wobei die Neigung vorteilhaft zwischen 0 und 60° beträgt. Der Aschesammelkanal kann vorteilhaft ebenfalls mit Fluidisierluft beschickbar sein, die dazu beiträgt, daß die Grobasche aus dem Wirbelschichtofen ausgetragen wird. Bei einem rechteckigen Düsenboden ist der zumindest eine Aschesammelkanal vorteilhaft mittig oder seitlich angeordnet. Bei einem runden Düsenboden ist eine mittige Positionierung des Aschesammelkanals von Vorteil.

Die Fläche des Düsenbodens kann erfindungsgemäß rastermäßig aufgeteilt sein, wobei die einzelnen Rasterflächen zu mehreren Regeleinheiten zusammenfaßbar sind. Auf diese Weise kann eine optimale Fluidisierung des Wirbelbettes eingestellt werden. Die Regelung erfolgt vorzugsweise basierend auf der Primärluftmenge und/oder dem Druckverlust.

Nachfolgend wird die vorliegende Erfindung unter Bezugnahme auf die Zeichnung genauer beschrieben. Daran ist:
- Fig. 1:: eine perspektivische Ansicht einer bevorzugten Ausführungsform des Düsenbodens gemäß der vorliegenden Erfindung;
- Fig. 2:: eine Querschnittansicht entlang der in Fig. 1 dargestellten Schnittlinie II-II;
- Fig. 3:: eine Vorderquerschnittansicht einer ersten Ausführungsform des erfindungsgemäßen Wirbelschichtofens;
- Fig. 4:: eine Seitenquerschnittansicht der in Fig. 3 dargestellten ersten Ausführungsform des erfindungsgemäßen Wirbelschichtofens;
- Fig. 5:: eine Querschnittansicht einer zweiten Ausführungsform des erfindungsgemäßen Wirbelschichtofens und
- Fig. 6:: eine Querschnittansicht einer dritten Ausführungsform des erfindungsgemäßen Wirbelschichtofens.

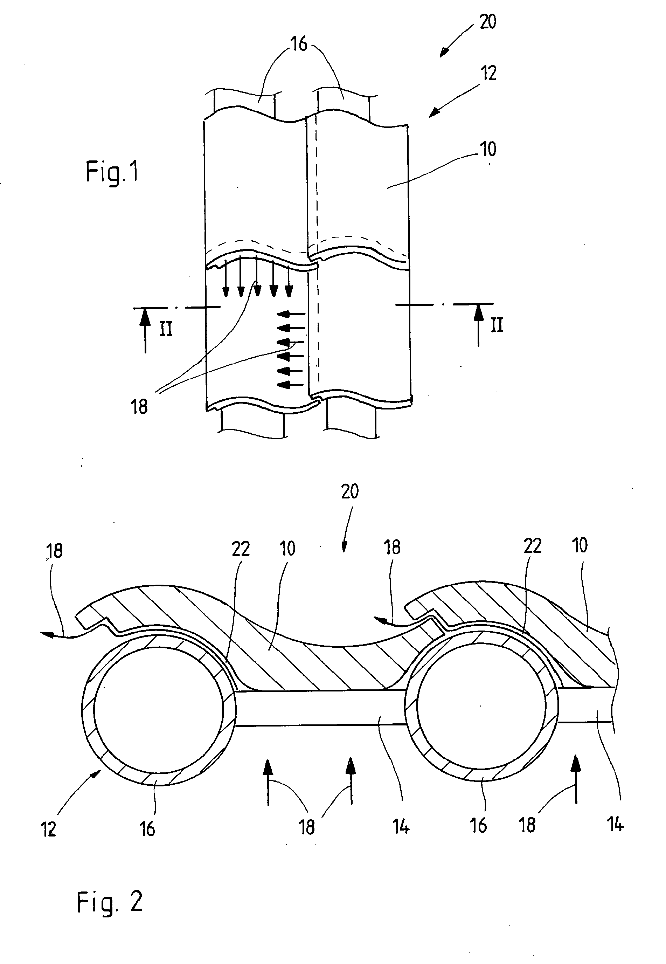

Es sei darauf hingewiesen, daß es sich bei den Fign. 1 bis 6 lediglich um Prinzipskizzen handelt.

Fig. 1 ist eine perspektivische Ansicht und zeigt die beispielhafte Anordnung von vier plattenförmigen Düsen auf einer Tragkonstruktion 12. Die Tragkonstruktion 12 umfaßt mit Stegen 14 verbundene Rohre 16, wobei in Fig. 1 nur die Rohre 16 zu erkennen sind. Die plattenförmigen Düsen 10 sind dachziegelartig ausgebildet und Seite an Seite einander überlappend angeordnet, wobei die gestrichelten Linien die verdeckten Kanten der Düsen 10 darstellen. Am Beispiel der linken unteren Düse 10 repräsentieren die Pfeile 18 die aus den Düsen 10 austretende Fluidisierluft. Vorliegend tritt die Fluidisierluft jeweils aus zwei Seiten jeder Düse 10 aus und tritt unter Nutzung der wellenförmigen Oberfläche des Düsenbodens 20 und unter Nutzung des Coandereffektes in das Wirbelbett ein.

Fig. 2 ist eine vergrößerte Querschnittansicht entlang der in Fig. 1 dargestellten Schnittlinie II-II. Wie in Fig. 2 besser zu erkennen ist, umfaßt die Tragkonstruktion 12 Rohre 16, die mit Hilfe von Stegen 14 miteinander verbunden sind. Zur Kühlung des Düsenbodens 20 werden die Rohre 16 von einem Kühlmedium, beispielsweise Luft, durchströmt. Auf den Rohren 16 und den Stegen 14 sind die dachziegelartig ausgebildeten Düsen 10 einander überlappend verlegt. Fluidisierluft strömt die Tragkonstruktion 12 von unten an und wird durch Luftleitkanäle 22, die in den plattenförmigen Düsen 10 ausgebildet sind, durch die Düsen 10 ins Wirbelbett geleitet, wobei der Weg der Fluidisierluft durch den Düsenboden 20 durch die Pfeile 18 repräsentiert wird.

Es sollte klar sein, daß die in den Fign. 1 und 2 dargestellte Ausbildung der Düsen nur ein Beispiel für eine mögliche Düsenform und somit nicht einschränkend ist. Die Düsen 10 bestehen aus einem verschleißfesten Material, wie Keramik, Stahlguß oder dergleichen. Sie können wahlweise auch mit einer Feuerfestmasse überzogen sein, so daß sie den im Wirbelschichtofen vorherrschenden Temperaturen problemlos standhalten.

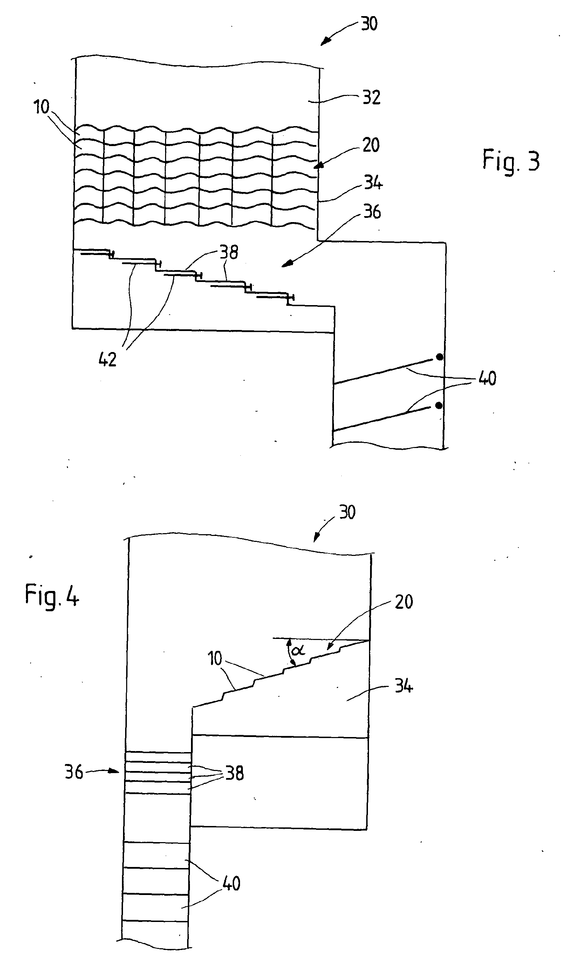

Fig. 3 ist eine schematische Vorderquerschnittansicht einer ersten Ausführungsform des erfindungsgemäßen Wirbelschichtofens 30. Der Wirbelschichtofen 30 umfaßt ein Wirbelbett 32, einen oberhalb zumindest eines Windkastens 34 angeordneten Düsenboden 20 und einen Aschesammelkanal 36. Der Düsenboden 20 besteht aus einer Vielzahl plattenförmiger Düsen 10, die, wie es in den Fign. 1 und 2 gezeigt ist, Seite an Seite und einander überlappend auf einer Tragkonstruktion 12 angeordnet sind. Die wellenförmige Fläche des Düsenbodens 20 ist rastermäßig aufgeteilt, so daß jeweils mehrere plattenförmige Düsen 10 zu einzelnen Rasterflächen zusammengefaßt sind. Diese Rasterflächen sind an separate Regeleinheiten angeschlossen, so daß das Wirbelbett 32 mit Hilfe der aus den Windkästen 34 durch den Düsenboden 20 strömenden Fluidisierluft optimal eingestellt werden kann. Unterhalb des Düsenbodens 20 ist ein Aschesammelkanal 36 mit stufenförmigen Absätzen 38 vorgesehen, über den Grobasche sowie nicht brennbare Störstoffe aus dem Wirbelschichtofen 30 ausgetragen und über eine Doppelpendelklappe 40 aus dem Ofen entfernt werden. Der Aschesammelkanal umfaßt ein Schubstangensystem mit mehreren Schubstangen 42, die entlang der Absätze 38 vor und zurück bewegbar sind, um die sich auf diesen Absätzen 38 ansammelnden Feststoffe zur Doppelpendelklappe 40 zu bewegen.

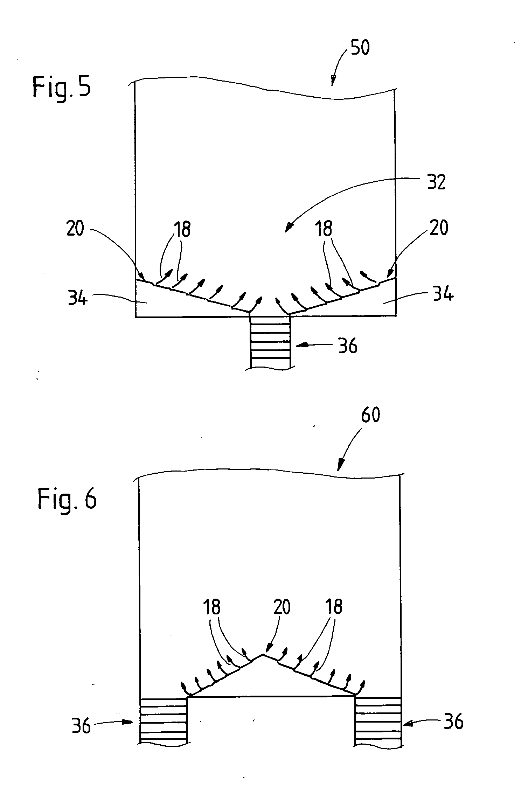

Fig. 4 ist eine Seitenquerschnittansicht der in Fig. 3 dargestellten ersten Ausführungsform des erfindungsgemäßen Wirbelschichtofens. In dieser Ansicht ist zu erkennen, daß der Düsenboden 20 gegenüber der Horizontalen um einen Winkel α in Richtung des Aschesammelkanals 36 geneigt ist, um den Austrag der Grobasche und der nicht brennbaren Reststoffe aus dem Wirbelschichtofen 30 zu erleichtern. Der Neigungswinkel α liegt vorzugsweise zwischen 0 und 40°.

Fig. 5 zeigt eine Querschnittansicht einer zweiten Ausführungsform des erfindungsgemäßen Wirbelschichtofens. Der Wirbelschichtofen 50 umfaßt einen Düsenboden 20, in dem mittig ein Aschesammelkanal 36 integriert ist.

Fig. 6 ist eine Querschnittansicht einer dritten Ausführungsform des erfindungsgemäßen Wirbelschichtofens. Der Wirbelschichtofen 60 umfaßt einen Düsenboden 20, in den seitlich mehrere Aschesammelkanäle 36 integriert sind.

Es sollte klar sein, daß die beschriebenen Ausführungsformen des erfindungsgemäßen Wirbelschichtofens nur als Beispiel dienen und daß weitere Modifikationen möglich sind, ohne den Schutzbereich der vorliegenden Erfindung zu verlassen, der durch die beiliegenden Ansprüche definiert ist.

### Bezugszeichenliste

- 10: plattenförmige Düsen
- 12: Tragkonstruktion
- 14: Steg
- 16: Rohre
- 18: Pfeile
- 20: Düsenboden
- 22: Luftleitkanäle
- 30: Wirbelschichtofen
- 32: Wirbelbett
- 34: Windkasten
- 36: Aschesammelkanal
- 38: Absätze
- 40: Doppelpendelklappe
- 42: Schubstangen
- 50: Wirbelschichtofen
- 60: Wirbelschichtofen

## Patentansprüche

1. Wirbelschichtofen mit einem Wirbelbett (32) und einem Düsenboden (20) zum Eintragen von Fluidisierluft in das Wirbelbett (32),
**dadurch gekennzeichnet, daß**
der Düsenboden (20) im wesentlichen plattenförmige Düsen (10) umfaßt.

2. Wirbelschichtofen nach Anspruch 1, wobei der Düsenboden (20) eine im wesentlichen wellenförmige Oberfläche aufweist.

3. Wirbelschichtofen nach Anspruch 1 oder 2, wobei die Düsen (10) im wesentlichen dachziegelförmig sind.

4. Wirbelschichtofen nach einem der vorhergehenden Ansprüche, wobei die Düsen (10) Luftleitkanäle aufweisen.

5. Wirbelschichtofen nach einem der vorhergehenden Ansprüche, wobei die Düsen (10) ein verschleißfestes Material aufweisen.

6. Wirbelschichtofen nach einem der vorhergehenden Ansprüche, wobei der Düsenboden (20) gegenüber der Horizontalen geneigt ist.

7. Wirbelschichtofen nach Anspruch 6, wobei die Neigung α des Düsenbodens (20) gegenüber der Horizontalen maximal 40° beträgt.

8. Wirbelschichtofen nach einem der vorhergehenden Ansprüche, wobei der Düsenboden (20) eine Tragkonstruktion (12) aufweist, auf der die Düsen (10) angeordnet sind.

9. Wirbelschichtofen nach Anspruch 8, wobei die Tragkonstruktion (12) mit Stegen (14) verbundene Rohre (16) aufweist.

10. Wirbelschichtofen nach Anspruch 9, wobei die Rohre (16) mit einem Kühlmedium durchströmbare Kühlrohre sind.

11. Wirbelschichtofen nach Anspruch 9 oder 10, wobei die Rohre (16) als Transportrohe für die Fluidisierluft dienen.

12. Wirbelschichtofen nach einem der vorhergehenden Ansprüche, wobei der Düsenboden (20) Öffnungen aufweist, durch welche die Fluidisierluft unterhalb der Düsen (10) austritt.

13. Wirbelschichtofen nach einem der vorhergehenden Ansprüche, wobei die Düsen (10) derart beschaffen sind, daß im auf dem Düsenboden (20) angeordneten Zustand die Fluidisierluft an jeweils zwei Seiten der Düsen (10) austreten kann.

14. Wirbelschichtofen nach einem der vorhergehenden Ansprüche, wobei der Düsenboden (20) einen Aschesammelkanal (36) aufweist.

15. Wirbelschichtofen nach Anspruch 14, wobei der Aschesammelkanal (36) gegenüber der Horizontalen geneigt ist.

16. Wirbelschichtofen nach Anspruch 15, wobei die Neigung maximal 60° gegenüber der Horizontalen beträgt.

17. Wirbelschichtofen nach einem der Ansprüche 14 bis 16, wobei der Aschesammelkanal (36) mit Fluidisierluft beschickbar ist.

18. Wirbelschichtofen nach einem der Ansprüche 14 bis 17, wobei der Aschesammelkanal (36) bei rechteckigem Düsenboden (20) seitlich oder mittig angeordnet ist.

19. Wirbelschichtofen nach einem der Ansprüche 14 bis 17, wobei der Aschesammelkanal (36) bei rundem Düsenboden (20) mittig angeordnet ist.

20. Wirbelschichtofen nach einem der vorhergehenden Ansprüche, wobei die Fläche des Düsenbodens (20) rastermäßig aufgeteilt und die einzelnen Rasterflächen zu mehreren Regeleinheiten zusammenfaßbar sind.

21. Wirbelschichtofen nach Anspruch 20, wobei eine Regelung vorgesehen ist, die die Primärluftmenge und/oder den Druckverlust regelt.
